# EUROPÄISCHE PATENTSCHRIFT

(11) **EP 3 900 898 B1**
(45) Veröffentlichungstag und Bekanntmachung des Hinweises auf die Patenterteilung: **09.07.2025**
(21) Anmeldenummer: 21164926.4
(22) Anmeldetag: 25.03.2021
(51) Int. Cl.: B26D 1/08

(54) **TIEFZIEHVERPACKUNGSMASCHINE UND VERFAHREN ZUM ANSTEUERN EINER FOLIENSTANZE**
DEEP DRAW PACKAGING MACHINE AND METHOD FOR CONTROLLING A FILM PUNCH
EMBOUTISSEUSE-ENVELOPPEUSE SOUS PELLICULE ET PROCÉDÉ DE COMMANDE D'UNE POINÇONNEUSE DE FEUILLE

(30) Priorität: 21.04.2020 DE 102020204997
(43) Veröffentlichungstag der Anmeldung: 27.10.2021
(73) Patentinhaber: MULTIVAC Sepp Haggenmüller SE & Co. KG, 87787 Wolfertschwenden (DE)
(72) Erfinder: HOLDERIED, Thomas, 87463 Dietmannsried (DE); PFISTER, Marcus, 87730 Bad Grönenbach (DE); HETZ, Maximilian, 87490 Haldenwang (DE)
(74) Vertreter: Grünecker Patent- und Rechtsanwälte PartG mbB

(56) Entgegenhaltungen:
- EP-A1- 2 586 591
- EP-B1- 3 109 017
- US-A1- 2003 126 963
- US-B1- 6 550 361

## Beschreibung

Die Erfindung bezieht sich auf eine Tiefziehverpackungsmaschine gemäß dem Oberbegriff des Anspruchs 1. Weiter betrifft die Erfindung ein Verfahren gemäß dem Oberbegriff des Anspruchs 13.

Eine gattungsgemäße Tiefziehverpackungsmaschine ist aus der EP 3 109 017 B1 bekannt. Eine darin als vorbekannt angenommene Folienstanze zum Durchtrennen einer Folie wird mittels eines Pneumatikzylinders zwischen einer geöffneten und einer geschlossenen Position verstellt. Im dazugehörigen Kraftverlauf kommt es zu einem schlagartigen Kräfteeinbruch, wodurch im Kraftdiagramm das Durchtrennen der Folie angezeigt wird. Dennoch baut der Pneumatikzylinder auch danach weiterhin solange eine Andruckkraft auf, bis eine Druckleiste der Folienstanze mit einer voreingestellten maximalen Kraft gegen ein Messer der Folienstanze drückt, ehe der Stanzvorgang beendet und der Druck des Pneumatikzylinders abgebaut wird. Die pro Schneidarbeitstakt immer wieder bis auf das voreingestellte, maximale Kraftniveau arbeitende Folienstanze hat allerdings eine hohe Abnutzung des Messers zur Folge.

Alternativ zur oben beschriebenen Ausführungsform schlägt nun EP 3 109 017 B1 gemäß einer anderen Variante einen mittels eines Servomotors gesteuerten Trennvorgang vor, bei welchem im Vergleich zur pneumatischen Ausführungsform pro Schneidarbeitstakt das Messer der Folienstanze weniger beansprucht werden soll. Hierfür verfährt der Servomotor die Druckleiste immer bis in eine voreingestellte Arbeitsposition, die einer bestimmten Stellung des Servomotors entspricht. Die Arbeitsposition kann wöchentlich, täglich oder bei jedem Maschinenstart der Tiefziehverpackungsmaschine kalibriert werden, indem die Druckleiste bei nicht vorhandener Folie bis auf Kontakt an das Messer bewegt und ein dafür erfassbarer Winkel an der Ausgangswelle des Servomotors in der Steuerung als Arbeitsposition hinterlegt wird. Damit nimmt jedoch der Kalibrierungsaufwand zu, da insbesondere bei einem Folienwechsel die Folienstanze nachjustiert werden sollte.

US 2003/126963 A1 offenbart eine Schneideinrichtung, an welcher ein Kraftverlauf während des Schneidvorgangs erfasst wird. Auf Basis eines während des Kraftverlaufs erfassten Durchtrennens einer Folie sowie auf Basis des Erfassens der anschließenden Maximalkraft des Bearbeitungstakts wird anhand einer sich daraus verrechneten Differenz ein Verschleißgrad des an der Schneideinrichtung eingesetzten Messers bestimmt. Auf Basis dieser Differenz lässt sich ein Steuersignal zum Anpassen eines Betriebs der Schneideinrichtung generieren.

Aufgabe der Erfindung ist es, eine Tiefziehverpackungsmaschine sowie ein Verfahren zum Ansteuern einer Folienstanze zur Verfügung zu stellen, deren Arbeitsweise noch effizienter ist als die im Stand der Technik eingesetzten Lösungen, sodass vor allem kürzere Herstellungszyklen sowie ein geringerer Verschleißgrad der an der Folienstanze eingesetzten Komponenten erreicht werden können.

Diese Aufgabe wird gelöst durch eine Tiefziehverpackungsmaschine mit den Merkmalen des Anspruchs 1. Ferner wird diese Aufgabe gelöst mittels eines Verfahrens mit den Merkmalen des Anspruchs 13. Vorteilhafte Weiterbildungen der Erfindung sind in den abhängigen Ansprüchen angegeben.

Die Erfindung bezieht sich auf eine Tiefziehverpackungsmaschine mit einer Formstation zum Tiefziehen von Mulden in eine Folienbahn, einer Einfüllstrecke zum Einfüllen von Produkten in die Mulden, einer Siegelstation zum Versiegeln der Mulden, einer Kettenführung zum Führen einer Transportkette für die Folienbahn, einer Querschneideeinrichtung zum Durchtrennen der Folienbahn in einer Richtung quer zur Transportrichtung, einer Längsschneideeinrichtung zum Durchtrennen der Folienbahn in der Transportrichtung und einer Steuervorrichtung zum Steuern von an der Tiefziehverpackungsmaschine ablaufenden Prozessen.

Die Querschneideeinrichtung umfasst eine Folienstanze, einen mittels der Steuervorrichtung steuerbaren Verstellantrieb zum Schließen und Öffnen der Folienstanze sowie eine Erfassungseinheit, die mit der Steuervorrichtung verbunden ist und die mindestens einen Sensor aufweist, der dazu ausgebildet ist, pro Bearbeitungstakt einen an der Folienstanze beim Öffnen und Schließen auftretenden Kraftverlauf aufzunehmen.

Kennzeichnend für die intermittierend arbeitende Tiefziehverpackungsmaschine ist, dass die Steuervorrichtung dazu ausgebildet ist, pro Bearbeitungstakt der Folienstanze bei einem mittels des Sensors während einer tendenziellen Kraftzunahme im Kraftverlauf erfassten temporären Krafteinbruch, durch den ein Durchtrennen der Folienbahn mittels eines Messers der Folienstanze ermittelbar ist, eine in Abhängigkeit davon dynamische Anpassung des Steuersignals zum Öffnen und/oder Schließen der Folienstanze durchzuführen.

Entgegen einer gemäß dem Stand der Technik voreingestellten Arbeitsposition, in welche die Folienstanze pro Bearbeitungstakt fährt, sowie entgegen einer gemäß dem Stand der Technik voreingestellten Maximalschneidkraft, mit welcher die Folienstanze pro Bearbeitungstakt agiert, wird bei der Erfindung das anhand des Krafteinbruchs im Kraftverlauf detektierte Signal pro Bearbeitungstakt, d.h. dynamisch zur Anpassung des Steuersignals der Steuervorrichtung zum Öffnen und/oder Schließen der Folienstanze, eingesetzt. Somit lässt sich während des Betriebs der Tiefziehverpackungsmaschine für jeden Bearbeitungstakt der Folienstanze automatisch der Kraftverlauf optimieren, wodurch die Arbeitsweise der Folienstanze noch präziser und verschleißärmer wird.

Dadurch, dass an der Steuervorrichtung das Steuersignal bei jedem Bearbeitungstakt, d. h. bei jedem Trennvorgang, hinsichtlich des Ereignisses des erfassten Durchbruchs der Folie automatisch angepasst wird, lässt sich die optimale Arbeitsweise der Folienstanze selbststeuernd an der Tiefziehverpackungsmaschine regeln. Bei der Erfindung arbeitet die Folienstanze, im Gegensatz zur vorbekannten Herangehensweise mit einer vorbestimmten Arbeitsposition bzw. Maximalschneidkraft, pro Bearbeitungstakt im Hinblick auf das Durchtrennen der Folie dynamisch, d.h., dass pro Bearbeitungstakt je nachdem zu welchem Zeitpunkt das Durchtrennen der Folie erfassbar ist, der anschließende Kraftverlauf zum Öffnen und/oder Schließen der Folienstanze daran angepasst ablaufen kann.

Eine dynamische Anpassung des Steuersignals könnte beispielsweise dadurch entstehen, dass durch das Erfassen des Durchbruchs der Folie die Steuerung dazu ausgebildet ist, eine Hubgeschwindigkeit zum Schließen der Folienstanze zu verlangsamen, das Schließen der Folienstanze abrupt oder zeitverzögert zu beenden, bevor die Folienstanze vollständig geschlossen ist, und/oder eine an das Erfassen des Durchbruchs der Folie anschließende Kraftzunahme bis zum Öffnen der Folienstanze mit einer geringeren zeitlichen Kraftänderungsrate im Vergleich zu einer Kraftänderungsrate der vor dem Durchbrechen der Folie erfassten Kraftzunahme zu steuern. Erfindungsgemäß ist durch das Erfassen des Durchbruchs der Folie die Steuerung dazu ausgebildet, in Abhängigkeit des Krafteinbruchs, insbesondere in Echtzeit, ein Startsignal zu erzeugen, wodurch das Öffnen der Folienstanze mit oder ohne zeitlichem Verzug triggerbar ist.

Eine Variante sieht vor, dass der Sensor eine Messbuchse sowie mindestens einen Dehnmessstreifen, welcher an der Messbuchse befestigt ist, aufweist. Damit ließe sich der Kraftverlauf, insbesondere der beim Durchtrennen der Folie auftretende Krafteinbruch, mittels einfacher, kostengünstiger konstruktiver Mittel erfassen.

Vorzugsweise ist die Messbuchse auf einer vertikalen Zugstange der Folienstanze aufgeschoben positioniert. Damit kann die Messbuchse auf kostengünstige Art und Weise an der Folienstanze angebracht werden und lässt sich hervorragend in den Kraftfluss der Folienstanze integrieren. Eine derartige Messbuchse ließe sich auch gut an bereits ausgelieferten Folienstanzen, d. h. an bereits ausgelieferten Tiefziehverpackungsmaschinen, nachrüsten. Für ihren Messeinsatz könnte die Messbuchse mittels einfacher Handhabe auf der Zugstange angeordnet werden.

Eine für Messzwecke vorteilhafte Variante sieht vor, dass die Messbuchse bei geöffneter Stellung der Folienstanze mittels einer (Schrauben-)Mutter vorgespannt auf der Zugstange angeordnet ist. Durch Andrücken der Folie gegen das Messer, d.h. bei geschlossener Folienstanze, könnte diese Vorspannung zumindest bis zum Durchtrennen der Folie entlastet werden, was mittels des Dehnmessstreifens als tendenzielle Kraftzunahme im Kraftverlauf erfassbar ist. Durch die Vorspannung der Messbuchse kann insbesondere der darauf befestigte Dehnmessstreifen reaktionsschnell Änderungen im Kraftverlauf der Folienstanze erfassen.

Vorzugsweise verfügt die Zugstange zur Befestigung der Mutter einen Gewindeabschnitt. Der Gewindeabschnitt kann ein Feingewinde aufweisen. Damit lässt sich die Vorspannung der Mutter besonders präzise einstellen. Zudem kann wegen der erhöhten Selbsthemmung eines Feingewindes ein besseres Messergebnis für zahlreiche Bearbeitungszyklen erzielt werden.

Gemäß einer Ausführungsform ist eine längs der Zugstange mittels einer Mutter eingestellte Stauchung der Messbuchse größer als eine im Betrieb der Folienstanze auftretende Längsstreckung der Zugstange. Damit lässt sich der Kraftverlauf beim Andrücken der Folie gegen das Messer mittels der dabei resultierenden Längsdehnung der Messbuchse erfassen.

Die an der Folienstanze eingesetzte Sensorik ließe sich dadurch verbessern, wenn der Dehnmessstreifen als Halbleiter-DMS und/oder als Rosetten-DMS ausgebildet ist. Damit ließe sich noch genauer der Kraftverlauf und vor allen Dingen noch präziser in Echtzeit ein Verlauf des Krafteinbruchs, d.h. das Durchtrennen der Folie, erfassen, so dass das Steuersignal der Steuerung reaktionsschnell dynamisch angepasst werden kann, um das Öffnen und/oder Schließen der Folienstanze pro Bearbeitungstakt zu optimieren.

Vorzugsweise ist der Dehnmessstreifen an einem inneren Umfang der Messbuchse angeordnet. Die Messbuchse liegt bei dieser Variante sozusagen als Gehäuse für den Dehnmessstreifen vor und schützt diesen vor unerwünschten Einflüssen, beispielsweise vor Feuchtigkeit. Für einen verbesserten hygienischen Betrieb der Folienstanze kann die Messbuchse aus Edelstahl hergestellt sein.

Vorzugsweise ist bei geschlossener Folienstanze die Folienbahn aus ihrer Transportebene heraus verlagert in Richtung des Messers gedrückt. Damit lässt sich die Folienbahn zusätzlich spannen, was den Trennvorgang beschleunigen kann und zu einer besseren Schnittkante am Verpackungsmaterial führt.

Besonders robust ausgebildet ist die Folienstanze dann, wenn das Messer feststehend gelagert ist. Der Verstellantrieb kann ein Servomotor sein, der zum Verstellen einer Druckleiste der Folienstanze konfiguriert ist. Beim Schließen der Folienstanze kann die Druckleiste von unten die Folienbahn gegen das darüber positionierte Messer drücken. Durch das Durchtrennen der Folienbahn geraten die Druckleiste und das Messer zueinander in Kontakt, wodurch es meist zu einem abrupten Krafteinbruch im gemessenen Kraftverlauf kommt.

Zweckmäßig ist es, wenn die Steuervorrichtung einen Regler aufweist, der dazu ausgebildet ist, als Steuersignal einen Steuerstrom für den Servomotor der Querschneideeinrichtung zum Öffnen und/oder Schließen der Folienstanze dynamisch anzupassen. Damit ist es möglich, pro Bearbeitungstakt in Abhängigkeit vom erfassten Durchtrennen der Folienbahn einen davon abhängigen Winkel einer Ausgangswelle des Servomotors anzufahren, der sich dynamisch in Reaktion auf das Durchtrennen der Folienbahn ergibt, wobei vorzugsweise ein Zurückfahren des Servomotors, sprich Öffnen der Folienstanze, zeitgleich mit Erreichen des angepassten Winkels oder mit einer einstellbaren Verzögerungszeit geschieht.

Vorstellbar ist es, dass das Durchführen der dynamischen Anpassung des Steuersignals zum Öffnen und/oder Schließen der Folienstanze vom Erreichen eines vorbestimmten Betrags des Krafteinbruchs und/oder vom Erfassen einer an den Krafteinbruch anschließenden Verzögerungszeit abhängig ist. Damit ließen sich Störgrößen im Kraftverlauf herausfiltern.

Eine bevorzugte Variante sieht vor, dass die Steuervorrichtung dazu konfiguriert ist, anhand des erfassten Kraftverlaufs eine Dicke der zu durchtrennenden Folienbahn zu ermitteln. Dies kann dadurch geschehen, dass im geschlossenen Zustand der Folienstanze eine Position der Druckleiste bei nicht vorliegender Folienbahn erfasst und mit einer Position verglichen wird, an welcher die Druckleiste steht, wenn bei vorliegender Folie die tendenzielle Kraftzunahme im Kraftverlauf beginnt. Vorstellbar ist es, dass anhand der erfassten Dicke ein Arbeitsparameter der Querschneideeinrichtung und/oder der Längsschneideeinrichtung automatisiert anpassbar ist.

Vorstellbar ist es, dass die zum Durchtrennen der Folienbahn erfasste nominale Kraft zur dynamischen Anpassung eines Steuersignals zum Steuern eines Betriebs der nachgelagerten Längsschneideeinrichtung einsetzbar ist. Dies ermöglicht eine abgestimmte Zusammenarbeit der Quer- und Längsschneideeinrichtung und somit ein präzises Vereinzeln von Verpackungen entlang der Tiefziehverpackungsmaschine.

Möglich ist es, dass die Steuervorrichtung dazu konfiguriert ist, anhand eines im Kraftverlauf erfassten Startzeitpunkts, anhand der für das Durchtrennen erfassten Kraft und/oder anhand eines Betrags des temporären Krafteinbruchs einen Verschleißgrad des Messers zu bestimmen. Der Verschleißgrad lässt sich vorzugsweise an der Tiefziehverpackungsmaschine an einer daran vorgesehenen Anzeigeeinrichtung visuell darstellen. Vorstellbar ist es, dass eine Anzeigeeinrichtung unmittelbar an der Folienstanze ausgebildet ist. In diesem Zusammenhang ist es vorstellbar, dass für das Messer der Folienstanze automatisch auf Service- bzw. Instandsetzungsintervalle hingewiesen wird.

Eine Ausführungsform sieht vor, dass die Tiefziehverpackungsmaschine eine Displayeinrichtung aufweist, an welcher der Kraftverlauf der Folienstanze visualisierbar ist und/oder die Steuervorrichtung dazu konfiguriert ist, anhand des erfassten Kraftverlaufs und/oder anhand mehrerer erfassten Kraftverläufe einen Steuerungsalgorithmus zu erzeugen. Die Displayeinrichtung kann als Teil der Anzeigeeinrichtung vorliegen, wobei sie vorzugsweise als Teil eines Bedienpaneels vorliegt, das im Bereich der Siegelstation zur Verfügung steht.

Vorstellbar ist es, dass die Steuervorrichtung dazu ausgebildet ist, beim Ausschalten bzw. beim Beenden eines Betriebs der Tiefziehverpackungsmaschine den Steuerungsalgorithmus anhand erfasster Daten der ab dem Maschinenstart durchgeführten Bearbeitungstakte der Folienstanze und/oder anderer Arbeitsstationen der Tiefziehverpackungsmaschine zu überarbeiten, damit ein Update davon bei einem Neustart der Tiefziehverpackungsmaschine auf deren Steuervorrichtung vorliegt.

Die Erfindung betrifft auch ein Verfahren für eine Tiefziehverpackungsmaschine zum Erfassen eines Durchtrennens einer Folienbahn mittels einer an der Tiefziehverpackungsmaschine vorgesehenen Folienstanze einer Querschneideeinrichtung. Hierfür wird an der Querschneideeinrichtung ein durch Öffnen und Schließen der Folienstanze verursachter Kraftverlauf zumindest abschnittsweise mittels mindestens eines Sensors pro Bearbeitungstakt der Folienstanze erfasst.

Kennzeichnend für das erfindungsgemäße Verfahren ist, dass eine Steuervorrichtung der Tiefziehverpackungsmaschine pro Bearbeitungstakt der Folienstanze in Reaktion auf einen mittels des Sensors während einer tendenziellen Kraftzunahme im Kraftverlauf erfassten temporären Krafteinbruch, wodurch das Durchtrennen der Folienbahn mittels eines Messers der Folienstanze erfasst wird, eine dynamische Anpassung eines Steuersignals zum Öffnen und/oder Schließen der Folienstanze durchführt.

Die Arbeit der Folienstanze lässt sich somit für jeden Bearbeitungstakt optimal anpassen, weil die Tiefziehverpackungsmaschine, insbesondere die Folienstanze, selbststeuernd dynamisch auf das Durchtrennen der Folienbahn reagiert. Damit lässt sich der Kalibrierungsaufwand erheblich reduzieren und ein Verschleißen des an der Folienstanze eingesetzten Messers lässt sich zumindest verlangsamen.

Eine dynamische Anpassung des Steuersignals könnte beispielsweise dadurch durchgeführt werden, dass durch das Erfassen des Durchbruchs der Folie die Steuerung eine Hubgeschwindigkeit zum Schließen der Folienstanze verlangsamt, das Schließen der Folienstanze abrupt oder zeitverzögert beendet, bevor die Folienstanze vollständig geschlossen ist, eine an das Erfassen des Durchbruchs der Folie anschließende Kraftzunahme bis zum Öffnen der Folienstanze mit einer geringeren zeitlichen Kraftänderungsrate im Vergleich zu einer Kraftänderungsrate der vor dem Durchbrechen der Folie erfassten Kraftzunahme steuert, und/oder in Abhängigkeit des Krafteinbruchs, insbesondere in Echtzeit, ein Startsignal erzeugt, wodurch das Öffnen der Folienstanze mit oder ohne zeitlichem Verzug getriggert wird.

Gemäß einer Ausführungsform der Erfindung misst der Sensor den Kraftverlauf pro Bearbeitungstakt der Folienstanze mittels mindestens eines Dehnmessstreifens, der im Kraftfluss an einer vorgespannt gelagerten Messbuchse angeordnet ist. Die Messbuchse wird mittels einer Mutter auf einer vertikalen Zugstange der Folienstanze auf Vorspannung, d.h. mit Druckbelastung, montiert, sodass sich die gestaucht montierte Messbuchse beim Durchtrennen der Folienbahn entsprechend einer Streckung der Zugstange mitausdehnt, wodurch anhand des daran befestigten Dehnmessstreifens der Kraftverlauf pro Bearbeitungstakt der Folienstanze präzise ermittelt werden kann.

Vorzugsweise liegt der temporäre Krafteinbruch annähernd in Form eines Dreiecksverlaufs vor, womit sich das schlagartige Durchstanzen der Folienbahn zuverlässig erkennen lässt. Der Dreiecksverlauf bzw. ein vergleichbarer abrupter Kurvenverlauf kann das Anpassen des Steuersignals triggern, sodass gleichzeitig oder mit einer gewissen Verzögerung das Öffnen der Folienstanze geschieht.

Im Folgenden werden Ausführungsformen der Erfindung anhand der Figuren genauer erläutert. Dabei zeigt:
- Fig. 1: eine Tiefziehverpackungsmaschine in perspektivischer Darstellung;
- Fig. 2a: eine Querschneideeinrichtung in Form einer Folienstanze der Tiefziehverpackungsmaschine in geöffneter Stellung;
- Fig. 2b: die Querschneideeinrichtung aus Fig. 2a in geschlossener Stellung;
- Fig. 3: die Folienstanze mit einer Messbuchse sowie deren vergrößerter Ausschnitt;
- Fig. 4: die Messbuchse mit Dehnmessstreifen in isolierter Darstellung;
- Fig. 5a: ein Diagramm zur Darstellung einer Positionsverlagerung einer verstellbaren Druckleiste der Folienstanze während eines Trennvorgangs; und
- Fig. 5b: einen an der Folienstanze erfassbaren Kraftverlauf während eines Bearbeitungstakts.

Gleiche Komponenten sind in den Figuren durchgängig mit gleichen Bezugszeichen versehen.

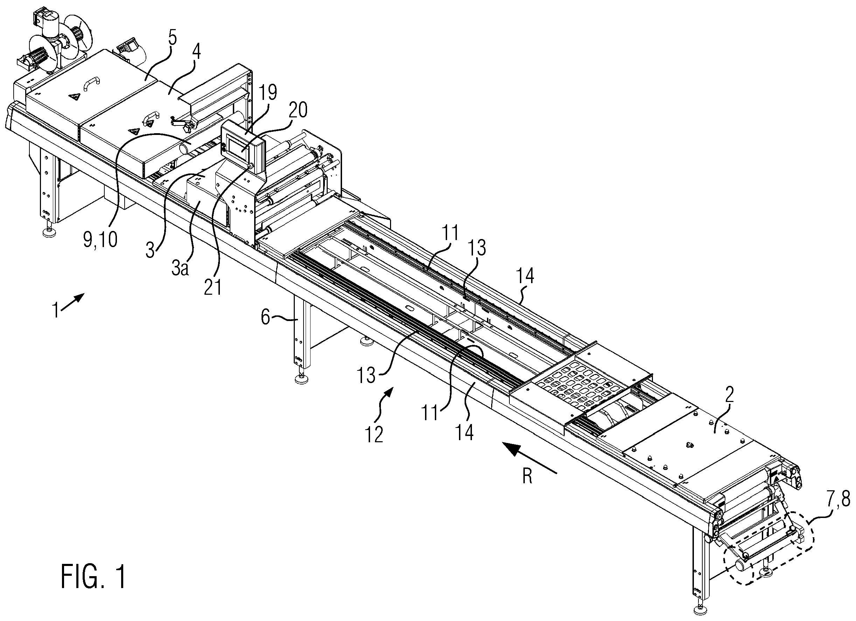

Fig. 1 zeigt in einer perspektivischen Ansicht eine erfindungsgemäße, intermittierend arbeitende Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Transportrichtung R an einem Maschinengestell 6 angeordnet sind. Eingangsseitig befindet sich an dem Maschinengestell 6 eine Zufuhrrolle 7, von der eine Unterfolie 8 abgezogen wird. Ferner weist die Tiefziehverpackungsmaschine 1 eine Transportkette 11 auf, die die Unterfolie 8 ergreift und diese pro Hauptarbeitstakt in Transportrichtung R weitertransportiert.

In der dargestellten Ausführungsform ist die Formstation 2 als eine Tiefziehstation ausgebildet, bei der durch Tiefziehen, beispielsweise mittels Druckluft oder Vakuum, Mulden in der Unterfolie 8 ausgeformt werden. Dabei kann die Formstation 2 derart ausgebildet sein, dass in Richtung senkrecht zur Transportrichtung R mehrere Mulden nebeneinander ausgebildet werden.

In Transportrichtung R hinter der Formstation 2 ist eine Einfüllstrecke 12 vorgesehen, in der die in der Unterfolie 8 ausgebildeten Mulden mit Produkten gefüllt werden.

Die Siegelstation 3 verfügt über eine hermetisch verschließbare Kammer 3a, in der die Atmosphäre in den Mulden vor dem Versiegeln mit der von einer Oberfolienaufnahme 9 abgegebenen Oberfolie 10 beispielsweise evakuiert und/oder durch Gasspülen mit einem Austauschgas oder einem Gasgemisch ersetzt werden kann.

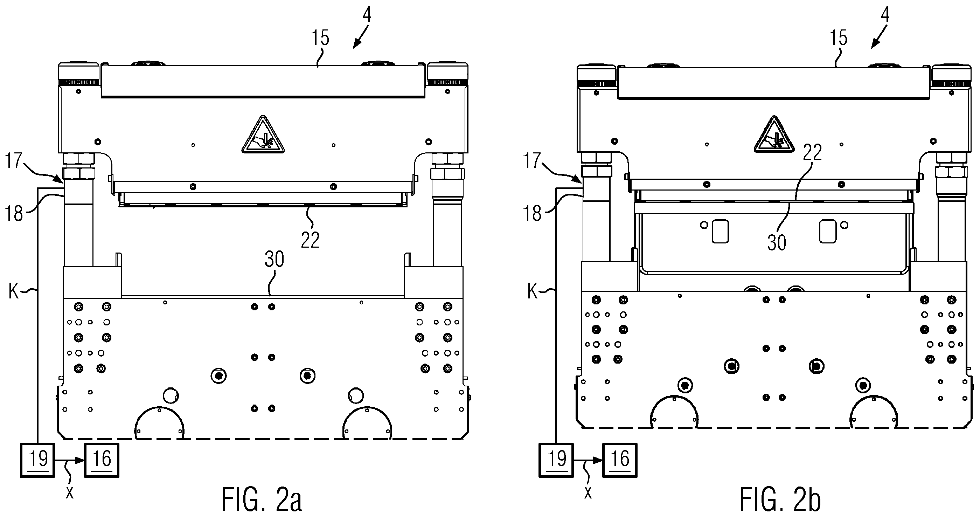

Die Querschneideeinrichtung 4 umfasst eine Folienstanze 15 (siehe Fig. 2a), die die Unterfolie 8 und die Oberfolie 10 (im Folgenden auch Folienbahn 8, 10 genannt) in einer Richtung quer zur Transportrichtung R zwischen benachbarten Mulden durchtrennt. Dabei arbeitet die Querschneideeinrichtung 4 derart, dass die Unterfolie 8 nicht über die gesamte Breite aufgetrennt wird, sondern zumindest in einem Randbereich nicht durchtrennt wird. Dies ermöglicht einen kontrollierten Weitertransport durch die Transportkette 11.

Die Längsschneideeinrichtung 5 kann als eine Messeranordnung ausgebildet sein, mit der die Unterfolie 8 und die Oberfolie 10 zwischen benachbarten Mulden und am seitlichen Rand der Unterfolie 8 in Transportrichtung R durchtrennt werden, so dass hinter der Längsschneideeinrichtung 5 vereinzelte Verpackungen vorliegen.

Die rechten und linken Transportketten 11 der Tiefziehverpackungsmaschine 1, die die Unterfolie 8 beidseitig ergreifen, werden jeweils in einer Kettenführung 13 geführt. Die Kettenführungen 13 sind nach außen hin jeweils von einer Seitenverkleidung 14 der Tiefziehverpackungsmaschine 1 geschützt und ggf. an der Seitenverkleidung 14 befestigt. Die Seitenverkleidung 14 kann ein Blechteil sein.

Die Tiefziehverpackungsmaschine 1 verfügt ferner über eine Steuervorrichtung 19. Sie hat die Aufgabe, die in der Tiefziehverpackungsmaschine 1 ablaufenden Prozesse zu steuern und zu überwachen. Eine Anzeigeeinrichtung 20 mit Bedienelementen 21 dient zum Visualisieren bzw. Beeinflussen der Prozessabläufe in der Tiefziehverpackungsmaschine 1 für bzw. durch einen Bediener.

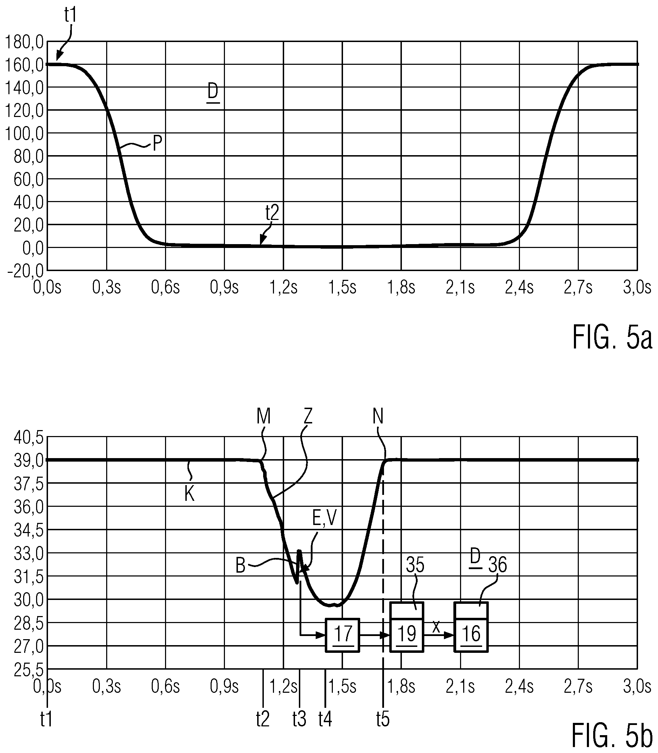

Fig. 2a zeigt die Folienstanze 15 der Querschneideeinrichtung 4. Die Folienstanze 15 befindet sich in Fig. 2a in einer offenen Stellung. Fig. 2a zeigt in schematischer Darstellung, dass die Steuervorrichtung 19 mit einem Verstellantrieb 16 der Folienstanze 15 funktional verbunden ist. Der Verstellantrieb 16 ist zum Öffnen und Schließen der Folienstanze 15 konfiguriert und kann einen Servomotor aufweisen. Ferner verfügt die Folienstanze 15 über eine Erfassungseinheit 17, die mit der Steuervorrichtung 19 funktional verbunden ist, und die einen Sensor 18 aufweist, der dazu ausgebildet ist, pro Bearbeitungstakt einen an der Folienstanze 15 beim Öffnen und Schließen auftretenden Kraftverlauf K (siehe Fig. 5b) aufzunehmen.

Die Folienstanze 15 weist ein Messer 22 auf, welches gemäß Fig. 2a feststehend gelagert ist. Ferner verfügt die Folienstanze 15 über eine verstellbare Druckleiste 30, die in Fig. 2a in einer abgesenkten Position angeordnet ist. Die verstellbare Druckleiste 30 wird mittels des Verstellantriebs 16 höhenverstellt, wobei sie bei einem Bearbeitungstakt zum Durchtrennen der Folienbahn 8, 10 von unten gegen das feststehende Messer 22 drückt.

In Fig. 2b sind das Messer 22 und die Druckleiste 30 auf Kontakt zueinander angeordnet. Die Folienstanze 15 befindet sich in Fig. 2b daher in einer geschlossenen Stellung. Bei dazwischen eingeklemmter Folienbahn 8, 10 kann mittels des Sensors 18 der Erfassungseinheit 17 der Kraftverlauf K erfasst und an die Steuervorrichtung 19 weitergeleitet werden. Auf Basis des Kraftverlaufs K kann durch Anpassung eines Steuersignals x der Verstellantrieb 16 der Folienstanze 15 dynamisch gesteuert werden.

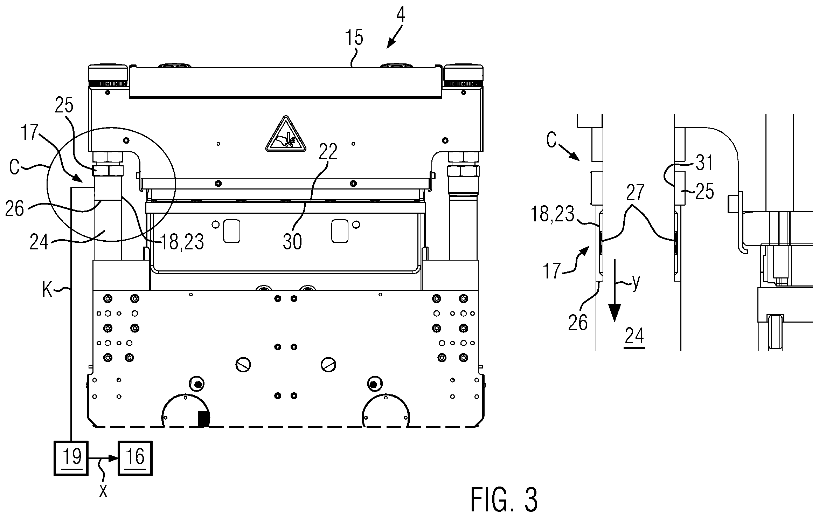

Fig. 3 zeigt die Folienstanze 15 in vergrößerter Darstellung, insbesondere einen vergrößerten Ausschnitt der Erfassungseinheit 17. Die Erfassungseinheit 17, insbesondere der Sensor 18, liegt in Form einer Messbuchse 23 vor. Die Messbuchse 23 ist auf eine vertikale Zugstange 24 aufgeschoben. Gemäß Fig. 3 ist die Messbuchse 23 mittels einer Mutter 25 vorgespannt auf der Zugstange 24 angeordnet. Zur Befestigung der Mutter sowie zum Einstellen der Vorspannung auf die Messbuchse 23 weist die Zugstange 24 einen Gewindeabschnitt 31 auf.

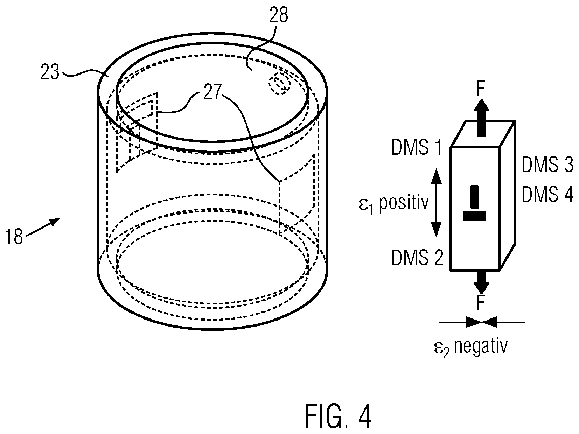

Beim Stanzvorgang, wenn die Druckleiste 30 von unten gegen das Messer 22 drückt, verlängert sich die Zugstange 24, sodass ein daran ausgebildetes Auflager 26 für die Messbuchse 23 in Richtung y nach unten wandert, wodurch sich die darauf sitzende Messbuchse 23 in Richtung y dehnt. Das Ausdehnen der Messbuchse 23 wegen der Zugbeanspruchung der Zugstange kann mittels eines an der Messbuchse befestigten Dehnmessstreifens 27 erfasst werden. Dieser wird im vergrößerten Ausschnitt C der Fig. 3 gezeigt. Die Messbuchse 23 hat im vergrößerten Ausschnitt C der Fig. 3 an ihrer Innenseite 28 (siehe auch Fig. 4) gegenüberliegende Dehnmessstreifen 27. Die Dehnmessstreifen 27 messen den Kraftverlauf K während des Bearbeitungstakts der Folienstanze 15, d. h. insbesondere beim Stanzvorgang, bei welchem die Druckleiste 23 von unten die Folienbahn 8, 10 gegen das darüber positionierte Messer 22 drückt.

Fig. 4 zeigt den Sensor 18 in isolierter Darstellung. Die Messbuchse 23 ist als kurzes Rohrstück ausgebildet und weist an der Innenseite 28 gegenüberliegende Dehnmessstreifen 27 auf. An der Messbuchse 23 werden die Dehnmessstreifen 27 anhand einer Vollbrücke (Brückenschaltung) geschalten, um den Kraftverlauf K während eines Bearbeitungstakts der Folienstanze 15 zu erfassen.

An der Folienstanze 15 bildet die auf die Zugstange 24 aufgeschobene und daran vorgespannt montierte Messbuchse 23 ein kostengünstiges Mittel zum Erfassen des Kraftverlaufs K aus. Eine Kalibrierung der Messbuchse 23 kann durch Einstellen der Vorspannkraft mittels der Mutter 25 auf einfache Art und Weise durchgeführt werden. Durch die Anordnung der Messbuchse 23 auf der Zugstange 24 werden Einflüsse durch eine Temperaturänderung und/oder eine Biegung der Zugstange 24 weitestgehend kompensiert. Die Dehnmessstreifen 27 können durch die sie umgebende Messbuchse 23 zudem gut gegen äußere Einflüsse geschützt und einfach ausgetauscht werden.

Fig. 5a zeigt eine Positionsverlagerung P der Druckleiste 30 und Fig. 5b zeigt den dazugehörigen Kraftverlauf K während eines Bearbeitungstakts D der Folienstanze 15.

Bei geöffneter Folienstanze 15 zum Startzeitpunkt t1 eines Bearbeitungstakts D befindet sich die Druckleiste 30 in der in Fig. 2a gezeigten Stellung.

Zum Zeitpunkt t2 klemmen die Druckleiste 30 und das Messer 22 zwischen sich die Folienbahn 8, 10 ein. Dadurch, dass die Druckleiste 30 von unten die Folienbahn 8, 10 gegen das darüber positionierte Messer 22 drückt, wird die Folienbahn 8, 10 durchtrennt, was im in Fig. 5b gezeigten Kraftverlauf K anhand des schlagartigen Krafteinbruchs E zum Trennzeitpunkt t3 dargestellt ist. Hier nimmt eine tendenzielle Kraftzunahme Z im Kraftverlauf K schlagartig ab. Dies bedeutet, dass die Folienbahn 8, 10 vollständig durchtrennt ist und die Druckleiste 30 in Kontakt an dem Messer 22 steht.

Fig. 5b zeigt schematisch, dass der mittels der Erfassungseinheit 17 ermittelte Kraftverlauf K, insbesondere der ermittelte Krafteinbruch E, von der Steuervorrichtung 19 erfasst wird, welche dazu ausgebildet ist, in Reaktion darauf dynamisch eine Anpassung des Steuersignals x zum Öffnen der Folienstanze 15 durchzuführen. Für die Steuersignalanpassung kann insbesondere ein Regler 35 der Steuervorrichtung 19 eingesetzt werden. Das Steuersignal x, welches pro Bearbeitungstakt D immer wieder neu bestimmt wird, regelt die Ansteuerung des Verstellantriebs 16, insbesondere eines Servomotors 36, der Folienstanze 15, um die Druckleiste 30 in Abhängigkeit vom erfassten Durchtrennen der Folienbahn 8, 10 anzusteuern.

Gemäß Fig. 5b weist der schlagartige Krafteinbruch E einen Dreiecksverlauf V auf. Der Dreiecksverlauf V und/oder ein Betrag B als Ausschlag für den Krafteinbruch E können als Voraussetzung für eine dynamische Anpassung des Steuersignals x vorliegen.

In Reaktion auf das Durchtrennen der Folienbahn 8, 10 kann die Steuervorrichtung 19 das Steuersignal x für den Verstellantrieb 16 derart anpassen, dass bis zu einem Zeitpunkt t4 das Messer 22 und die Druckleiste 30 auf Kontakt weiter zusammengedrückt werden. Die Dauer des Zeitintervalls t3 - t4 ist variabel an der Steuervorrichtung 19 einstellbar.

Ab dem Zeitpunkt t4 öffnet sich die Folienstanze 15, d. h. die Druckleiste 30 verfährt wieder in die geöffnete Stellung, wodurch ab dem Zeitpunkt t4 die gemessene Kraft bis zum Zeitpunkt t5 abnimmt. Ab dem Zeitpunkt t5 sind die Druckleiste 30 und das Messer 22 nicht mehr in Kontakt.

Vorstellbar ist es, dass der Zeitpunkt t4 mit Erreichen eines Betrages einer Kraftzunahme während des Zeitintervalls t3 - t4 bestimmbar ist, d.h. dementsprechend das Steuersignal x dynamisch angepasst wird.

Die Fig. 5a und 5b zeigen, dass der Beginn des Durchbrechens der Folienbahn 8, 10 durch den schlagartigen, temporären Krafteinbruch E im Kraftverlauf K erfasst wird. Dadurch ist es möglich, die Folienstanze 15 in jedem Bearbeitungstakt D soweit zu schließen, bis ein Durchbrechen der Folienbahn 8, 10 erkannt wird. Weiter kann damit eine unnötige Überlastung des Messers 22 vermieden werden, indem die Folienstanze 15 auch nur jeweils bis zum Erfassen des Durchbrechens der Folienbahn 8, 10 bzw. gering zeitverzögert geschlossen wird.

Anhand des oben beschriebenen Kraftverlaufs K lässt sich durch Auswertung charakteristischer Punkte (wie z.B. durch das Auftreffen der Druckleiste 30 auf die Folienbahn 8, 10 zum Zeitpunkt t2 und durch das Verlassen der Druckleiste 30 vom Messer 22 zum Zeitpunkt t5) erkennen, ob sich überhaupt eine Folienbahn 8, 10 in der Folienstanze 15 befindet. Bei vorhandener Folienbahn 8, 10 unterscheiden sich nämlich die Positionen M (Auftreffen der Druckleiste 30 auf die Folienbahn 8, 10) und N (Verlassen der Messerunterkante), wobei diese Erfassungswerte M, N bei fehlender Folie identisch sind. Bei Detektion einer fehlenden Folienbahn 8, 10 könnte an der Tiefziehverpackungsmaschine 1 eine nicht erfindungsgemäße Notausfunktion angesteuert werden.

## Patentansprüche

1. Tiefziehverpackungsmaschine (1) mit einer Formstation (2) zum Tiefziehen von Mulden in eine Folienbahn (8, 10), einer Einfüllstrecke (12) zum Einfüllen von Produkten in die Mulden, einer Siegelstation (3) zum Versiegeln der Mulden, einer Kettenführung (13) zum Führen einer Transportkette (11) für die Folienbahn (8, 10), einer Querschneideeinrichtung (4) zum Durchtrennen der Folienbahn (8, 10) in einer Richtung quer zur Transportrichtung (R), einer Längsschneideeinrichtung (5) zum Durchtrennen der Folienbahn (8, 10) in der Transportrichtung (R), und einer Steuervorrichtung (19) zum Steuern von an der Tiefziehverpackungsmaschine (1) ablaufenden Prozessen, wobei die Querschneideeinrichtung (4) eine Folienstanze (15), einen mittels der Steuervorrichtung (19) steuerbaren Verstellantrieb (16) zum Schließen und Öffnen der Folienstanze (15) sowie eine Erfassungseinheit (17) umfasst, die mit der Steuervorrichtung (19) verbunden ist und die mindestens einen Sensor (18) aufweist, der dazu ausgebildet ist, pro Bearbeitungstakt (D) einen an der Folienstanze (15) beim Öffnen und Schließen einhergehenden Kraftverlauf (K) aufzunehmen, **dadurch gekennzeichnet, dass**
die Steuervorrichtung (19) dazu ausgebildet ist, pro Bearbeitungstakt (D) der Folienstanze (15) bei einem mittels des Sensors (18) während einer tendenziellen Kraftzunahme (Z) im Kraftverlauf (K) erfassten temporären Krafteinbruch (E), wodurch ein Durchtrennen der Folienbahn (8, 10) mittels eines Messers (22) der Folienstanze (15) erfassbar ist, eine in Abhängigkeit davon dynamische Anpassung eines Steuersignals (x) zum Öffnen und/oder Schließen der Folienstanze (15) durchzuführen,
wobei durch das Erfassen des Durchtrennens der Folienbahn (8, 10) die Steuervorrichtung (19) dazu ausgebildet ist, in Abhängigkeit des Krafteinbruchs, insbesondere in Echtzeit, ein Startsignal zu erzeugen, wodurch das Öffnen der Folienstanze mit oder ohne zeitlichem Verzug triggerbar ist.

2. Tiefziehverpackungsmaschine nach Anspruch 1, **dadurch gekennzeichnet, dass** der Sensor (18) eine Messbuchse (23) sowie mindestens einen Dehnmessstreifen (27) aufweist, der an der Messbuchse (23) befestigt ist.

3. Tiefziehverpackungsmaschine nach Anspruch 2, **dadurch gekennzeichnet, dass** die Messbuchse (23) auf eine vertikale Zugstange (24) der Folienstanze (15) aufgeschoben ist.

4. Tiefziehverpackungsmaschine nach Anspruch 2 oder 3, **dadurch gekennzeichnet, dass** die Messbuchse (23) mittels einer Mutter (25) vorgespannt auf der Zugstange (24) angeordnet ist.

5. Tiefziehverpackungsmaschine nach Anspruch 4, **dadurch gekennzeichnet, dass** eine längs der Zugstange (24) mittels der Mutter (25) eingestellte Stauchung der Messbuchse (23) größer als eine im Betrieb der Folienstanze (15) auftretende Längsstreckung der Zugstange (24) ist.

6. Tiefziehverpackungsmaschine nach einem der vorangehenden Ansprüche 2 bis 5, **dadurch gekennzeichnet, dass** der Dehnmessstreifen (27) als Halbleiter-DMS und/oder als Rosetten-DMS ausgebildet ist.

7. Tiefziehverpackungsmaschine nach einem der vorangehenden Ansprüche 2 bis 6, **dadurch gekennzeichnet, dass** der Dehnmessstreifen (27) an einem inneren Umfang (28) der Messbuchse (23) angeordnet ist.

8. Tiefziehverpackungsmaschine nach einem der vorangehenden Ansprüche, **dadurch gekennzeichnet, dass** bei geschlossener Folienstanze (15) die Folienbahn (8, 10) aus ihrer Transportebene heraus verlagert in Richtung des Messers (22) gedrückt ist.

9. Tiefziehverpackungsmaschine nach einem der vorangehenden Ansprüche, **dadurch gekennzeichnet, dass** die Steuervorrichtung (19) einen Regler (35) umfasst, der dazu ausgebildet ist, als Steuersignal (x) einen Steuerstrom für einen Servomotor (36) der Querschneideeinrichtung (4) zum Öffnen und/oder Schließen der Folienstanze (15) anzupassen.

10. Tiefziehverpackungsmaschine nach einem der vorangehenden Ansprüche, **dadurch gekennzeichnet, dass** die Steuervorrichtung (19) dazu konfiguriert ist, anhand des erfassten Kraftverlaufs (K) eine Dicke der zu durchtrennenden Folienbahn (8, 10) zu ermitteln.

11. Tiefziehverpackungsmaschine nach einem der vorangehenden Ansprüche, **dadurch gekennzeichnet, dass** die Steuervorrichtung (19) dazu konfiguriert ist, anhand eines im Kraftverlauf (K) erfassten Startzeitpunkts (t3) und/oder eines Betrags (B) des temporären Krafteinbruchs (E) einen Verschleißgrad des Messers (22) zu bestimmen.

12. Tiefziehverpackungsmaschine nach einem der vorangehenden Ansprüche, **dadurch gekennzeichnet, dass** die Tiefziehverpackungsmaschine (1) eine Anzeigeeinrichtung (20) aufweist, woran der Kraftverlauf (K) der Folienstanze (15) visualisierbar ist und/oder die Steuervorrichtung (19) dazu konfiguriert ist, anhand des erfassten Kraftverlaufs (K) einen Steuerungsalgorithmus zu erzeugen.

13. Verfahren an einer Tiefziehverpackungsmaschine (1) zum Erfassen eines Durchtrennens einer Folienbahn (8, 10) mittels einer an der Tiefziehverpackungsmaschine (1) vorgesehenen Folienstanze (15) einer Querschneideeinrichtung (4) , wobei an der Querschneideeinrichtung (4) ein durch Öffnen und Schließen der Folienstanze (15) verursachter Kraftverlauf (K) zumindest abschnittsweise mittels mindestens eines Sensors (18) pro Bearbeitungstakt (D) der Folienstanze (15) erfasst wird, **dadurch gekennzeichnet, dass** eine Steuervorrichtung (19) der Tiefziehpackungsmaschine (1) pro Bearbeitungstakt (D) der Folienstanze (15) in Reaktion auf einen mittels des Sensors (18) während einer tendenziellen Kraftzunahme (Z) im Kraftverlauf (K) erfassten temporären Krafteinbruch (E), wodurch das Durchtrennen der Folienbahn (8, 10) mittels eines Messers (22) der Folienstanze (15) angezeigt wird, eine dynamische Anpassung eines Steuersignals (x) zum Öffnen und/oder Schließen der Folienstanze (15) durchführt, wobei durch das Erfassen des Durchtrennens der Folienbahn (8, 10) die Steuervorrichtung (19) in Abhängigkeit des Krafteinbruchs, insbesondere in Echtzeit, ein Startsignal erzeugt, wodurch das Öffnen der Folienstanze mit oder ohne zeitlichem Verzug getriggert wird.

14. Verfahren nach Anspruch 13, **dadurch gekennzeichnet, dass** der Sensor (18) den Kraftverlauf (K) mittels mindestens eines Dehnmessstreifens (27) misst, der an einer vorgespannten Messbuchse (23) befestigt ist.

15. Verfahren nach Anspruch 13 oder 14, **dadurch gekennzeichnet, dass** der temporäre Krafteinbruch (E) annähernd die Form eines Dreiecksverlaufs (V) aufweist.

## Claims

1. Thermoforming packaging machine (1) with a forming station (2) for thermoforming troughs in a film web (8, 10), a filling path (12) for filling products into the troughs, a sealing station (3) for sealing the troughs, a chain guide (13) for guiding a transport chain (11) for the film web (8, 10), a transverse cutting device (4) for cutting the film web (8, 10) in a direction transverse to the transport direction (R), a longitudinal cutting device (5) for cutting the film web (8, 10) in the transport direction (R), and a control device (19) for controlling processes running on the thermoforming packaging machine (1), wherein the transverse cutting device (4) comprises a film punch (15), an adjustment drive (16) which can be controlled by means of the control device (19) for closing and opening the film punch (15), and a detection unit (17) which is connected to the control device (19) and which has at least one sensor (18) which is configured to detect, per processing cycle (D), a force progression (K) occurring at the film punch (15) during opening and closing,
**characterized in that**
the control device (19) is configured to carry out, per processing cycle (D) of the film punch (15), a dynamic adaptation of a control signal (x) in the subsequent force progression for opening and/or closing the film punch (15) as a function of a temporary slump in force (E) detected by means of the sensor (18) during a tendential increase in force (Z) in the force progression (K), as a result of which a cutting of the film web (8, 10) by means of a knife (22) of the film punch (15) can be detected, wherein by detecting the break-through of the film web (8, 10) the control device (19) is configured to generate a start signal as a function of the slump in force, in particular in real time, whereby the opening of the film punch (15) can be triggered with or without a time delay.

2. Thermoforming packaging machine according to claim 1, **characterized in that** the sensor (18) comprises a measuring socket (23) and at least one strain gauge (27) attached to the measuring socket (23).

3. Thermoforming packaging machine according to claim 2, **characterized in that** the measuring socket (23) is pushed onto a vertical tie rod (24) of the film punch (15).

4. Thermoforming packaging machine according to claim 2 or 3, **characterized in that** the measuring socket (23) is arranged pretensioned on the tie rod (24) by means of a nut (25).

5. Thermoforming packaging machine according to claim 4, **characterized in that** a compression of the measuring socket (23) set along the tie rod (24) by means of the nut (25) is greater than a longitudinal extension of the tie rod (24) occurring during operation of the film punch (15).

6. Thermoforming packaging machine according to one of the preceding claims 2 to 5, **characterized in that** the strain gauge (27) is configured as a semiconductor strain gauge and/or as a rosette strain gauge.

7. Thermoforming packaging machine according to one of the preceding claims 2 to 6, **characterized in that** the strain gauge (27) is arranged on an inner circumference (28) of the measuring socket (23).

8. Thermoforming packaging machine according to one of the preceding claims, **characterized in that** when the film punch (15) is closed, the film web (8, 10) is displaced out of its transport plane in the direction of the knife (22).

9. Thermoforming packaging machine according to one of the preceding claims, **characterized in that** the control device (19) comprises a controller (35) which is configured to adapt, as a control signal (x), a control current for a servomotor (36) of the transverse cutting device (4) for opening and/or closing the film punch (15).

10. Thermoforming packaging machine according to one of the preceding claims, **characterized in that** the control device (19) is configured to determine a thickness of the film web (8, 10) to be cut on the basis of the detected force progression (K).

11. Thermoforming packaging machine according to one of the preceding claims, **characterized in that** the control device (19) is configured to determine a degree of wear of the knife (22) on the basis of a start time (t3) detected in the force progression (K) and/or an amount (B) of the temporary slump in force (E).

12. Thermoforming packaging machine according to one of the preceding claims, **characterized in that** the thermoforming packaging machine (1) has a display device (20), on which the force progression (K) of the film punch (15) can be visualized and/or the control device (19) is configured to generate a control algorithm on the basis of the detected force progression (K).

13. Method on a thermoforming packaging machine (1) for detecting a cutting of a film web (8, 10) by means of a film punch (15) of a transverse cutting device (4) provided on the thermoforming packaging machine (1), wherein a force progression (K) caused by opening and closing of the film punch (15) is detected at least in sections on the transverse cutting device (4) by means of at least one sensor (18) per processing cycle (D) of the film punch (15), **characterized in that** a control device (19) of the thermoforming packaging machine (1) carries out a dynamic adaptation of a control signal (x) in the subsequent force progression for opening and/or closing the film punch (15) per processing cycle (D) of the film punch (15) in response to a temporary slump in force (E) detected by means of the sensor (18) during a tendential increase in force (Z) in the force progression (K), as a result of which the cutting of the film web (8, 10) is indicated by means of a knife (22) of the film punch (15), wherein by detecting the break-through of the film web (8, 10) the control device (19) is configured to generate a start signal as a function of the slump in force, in particular in real time, whereby the opening of the film punch (15) can be triggered with or without a time delay.

14. Method according to claim 13, **characterized in that** the sensor (18) measures the force progression (K) by means of at least one strain gauge (27) attached to a pretensioned measuring socket (23).

15. Method according to claim 13 or 14, **characterized in that** the temporary slump in force (E) has approximately the shape of a triangular progression (V).

## Revendications

1. Thermoformeuse d'emballage (1) comprenant une poste de formage (2) pour thermoformer des barquettes dans une bande de film (8, 10), une section de remplissage (12) pour remplir les barquettes avec des produits, un poste de scellage (3) pour sceller les barquettes, un guidechaîne (13) pour guider une chaîne de transport (11) pour la bande de film (8, 10), un dispositif de coupe transversale (4) pour découper la bande de film (8, 10) dans une direction transversale à la direction de transport (R), un dispositif de coupe longitudinale (5) pour découper la bande de film (8, 10) dans la direction de transport (R), et un dispositif de commande (19) pour commander les processus se déroulant sur la thermoformeuse d'emballage (1), dans laquelle le dispositif de coupe transversale (4) comprend un poinçon de film (15), un entraînement de déplacement (16) commandable par le dispositif de commande (19) pour fermer et ouvrir le poinçon de film (15), et une unité de détection (17) qui est connectée au dispositif de commande (19) et comporte au moins un capteur (18) conçu pour enregistrer une courbe de force (K) appliquée sur le poinçon de film (15) lors de l'ouverture et de la fermeture à chaque cycle de façonnage (D),
**caractérisée en ce que** le dispositif de commande (19) est conçu pour effectuer, à chaque cycle de façonnage (D) du poinçon de film (15), un réglage dynamique d'un signal de commande (x) pour l'ouverture et/ou la fermeture du poinçon de film (15) en fonction d'une chute de force temporaire (E) détectée par le capteur (18) pendant une augmentation de force tendancielle (Z) dans la courbe de force (K), ce qui permet de détecter une découpe de la bande de film (8, 10) au moyen d'un couteau (22) du poinçon de film (15),
dans laquelle le dispositif de commande (19) est conçu pour générer un signal de démarrage du fait de la détection de la découpe de la bande de film (8, 10), en particulier en temps réel, en fonction de la chute de force, ce qui permet de déclencher l'ouverture du poinçon de film avec ou sans délai.

2. Thermoformeuse d'emballage selon la revendication 1, **caractérisée en ce que** le capteur (18) comporte un connecteur de mesure (23) ainsi qu'au moins une jauge de déformation (27) qui est fixée au connecteur de mesure (23).

3. Thermoformeuse d'emballage selon la revendication 2, **caractérisée en ce que** le connecteur de mesure (23) est poussé sur une barre de traction verticale (24) du poinçon de film (15).

4. Thermoformeuse d'emballage selon la revendication 2 ou 3, **caractérisée en ce que** le connecteur de mesure (23) est agencé sur la barre de traction (24) sous précontrainte au moyen d'un écrou (25).

5. Thermoformeuse d'emballage selon la revendication 4, **caractérisée en ce qu'**une compression du connecteur de mesure (23) réglée le long de la barre de traction (24) au moyen de l'écrou (25) est supérieure à une extension longitudinale de la barre de traction (24) se produisant pendant le fonctionnement du poinçon de film (15).

6. Thermoformeuse d'emballage selon l'une des revendications précédentes 2 à 5, **caractérisée en ce que** la jauge de déformation (27) est conçue comme une jauge de déformation à semi-conducteur et/ou comme une jauge de déformation à rosette.

7. Thermoformeuse d'emballage selon l'une des revendications précédentes 2 à 6, **caractérisée en ce que** la jauge de déformation (27) est agencée sur une circonférence interne (28) du connecteur de mesure (23).

8. Thermoformeuse d'emballage selon l'une des revendications précédentes, **caractérisée en ce que** lorsque le poinçon de film (15) est fermé, la bande de film (8, 10) est déplacée de son plan de transport et pressée en direction du couteau (22).

9. Thermoformeuse d'emballage selon l'une des revendications précédentes, **caractérisée en ce que** le dispositif de commande (19) comprend un contrôleur (35) qui est conçu pour adapter, en tant que signal de commande (x), un courant de commande pour un servomoteur (36) du dispositif de coupe transversale (4) pour ouvrir et/ou fermer le poinçon de film (15).

10. Thermoformeuse d'emballage selon l'une des revendications précédentes, **caractérisée en ce que** le dispositif de commande (19) est configuré pour déterminer une épaisseur de la bande de film (8, 10) à découper sur la base de la courbe de force (K) détectée.

11. Thermoformeuse d'emballage selon l'une des revendications précédentes, **caractérisée en ce que** le dispositif de commande (19) est configuré pour déterminer un degré d'usure du couteau (22) sur la base du temps de démarrage (t3) détecté dans la courbe de force (K) et/ou de la grandeur (B) de la chute de force temporaire (E).

12. Thermoformeuse d'emballage selon l'une des revendications précédentes, **caractérisée en ce que** la thermoformeuse d'emballage (1) comporte un dispositif d'affichage (20) sur lequel la courbe de force (K) du poinçon de film (15) peut être visualisée et/ou **en ce que** le dispositif de commande (19) est configuré pour générer un algorithme de commande sur la base de la courbe de force (K) détectée.

13. Procédé mis en œuvre sur une thermoformeuse d'emballage (1) afin de détecter la découpe d'une bande de film (8, 10) au moyen d'un poinçon de film (15) d'un dispositif de coupe transversale (4) pourvu sur la thermoformeuse d'emballage (1), dans lequel une courbe de force (K) provoquée par l'ouverture et la fermeture du poinçon de film (15) est détectée au moins par sections sur le dispositif de coupe transversale (4) au moyen d'au moins un capteur (18) à chaque cycle de façonnage (D) du poinçon de film (15),
**caractérisé en ce qu'**un dispositif de commande (19) de la thermoformeuse d'emballage (1) effectue un réglage dynamique d'un signal de commande (x) pour l'ouverture et/ou la fermeture du poinçon de film (15) à chaque cycle de façonnage (D) du poinçon de film (15) en réponse à une chute de force temporaire (E) détectée par le capteur (18) pendant une augmentation de force tendancielle (Z) dans la courbe de force (K), ce qui indique la découpe de la bande de film (8, 10) au moyen d'un couteau (22) du poinçon de film (15),
dans lequel, du fait de la détection de la découpe de la bande de film (8, 10), le dispositif de commande (19) génère un signal de démarrage, en particulier en temps réel, en fonction de la chute de force, ce qui déclenche l'ouverture du poinçon de film avec ou sans délai.

14. Procédé selon la revendication 13, **caractérisé en ce que** le capteur (18) mesure la courbe de force (K) au moyen d'au moins une jauge de déformation (27) fixée sur un connecteur de mesure précontraint (23).

15. Procédé selon la revendication 13 ou 14, **caractérisé en ce que** la chute de force temporaire (E) suit approximativement une courbe de forme triangulaire (V).
